Europäisches Patentamt

European Patent Office

Office européen des brevets

(11) Publication number: **0 446 773 A1**

## EUROPEAN PATENT APPLICATION

(21) Application number: **91103420.5**

(22) Date of filing: **06.03.91**

(51) Int. Cl.⁵: **E05F 3/02, F16F 9/02**

(30) Priority: **10.03.90 DE 4007698**

(43) Date of publication of application:
**18.09.91 Bulletin 91/38**

(84) Designated Contracting States:
**DE ES FR GB IT**

(71) Applicant: **Stabilus GmbH**
**Wallersheimer Weg 100**
**W-5400 Koblenz-Neuendorf(DE)**

(72) Inventor: **Mintgen, Rolf, Dipl.-Ing. (FH)**

Bahnhofstrasse 27
W-5441 Thür(DE)
Inventor: **Höfer, Walter**
Wolfskaulstrasse 7
W-5400 Koblenz Güls(DE)

(74) Representative: **Weickmann, Heinrich,**
**Dipl.-Ing. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

(54) **A construction assembly comprising a gas spring.**

(57) According to an illustrative example of the invention, a motor-vehicle comprises a trunk lid (3) movable about a horizontal axis between a closed position and an open position. A gas spring (1) is connected to both the framework (2) of the motor-vehicle and the trunk lid (3). A limited linear movement is possible between the gas spring (9) and the trunk lid (3). A lever (13) is pivotally mounted to the framework. When the trunk lid (3) is closed, the end of the gas (1) spring which is connected with the trunk lid (3), comes into engagement with the lever (13). The lever is thereby moved into an aligned position with respect to the axis of the gas spring. Such, the end of the gas spring (1) connected with the trunk lid (3) is displaced out of force transmitting engagement with the trunk lid (3) and the spring force of the gas spring (1) is supported by the framework (2) through the lever (13).

Fig. 1

EP 0 446 773 A1

BACKGROUND OF THE INVENTION

This invention relates to a construction assembly comprising a basic construction unit, a movable construction element pivotally mounted on said basic construction unit about a substantially horizontal axis and pivotally movable between a first terminal position and a second terminal position, at least one gas spring having an axis, said gas spring including two gas spring components, namely a cylinder and a piston rod, a first one of said gas spring components being connected to said basic construction unit by first connection means and a second one of said gas spring components being connected to said construction element by second connection means, said gas spring acting with its spring force onto said construction element, such as to compensate for at least a part of the weight of said construction element during its movement between said first terminal position and said second terminal position, reaction forces of said gas spring occurring in said first and in said second connection means, reaction force control means being provided on said basic construction unit for cooperation with said gas spring in response to said construction element approaching said first terminal position such as to at least partially eliminate said reaction force onto said second connection means, when said construction element is in said first terminal position. The basic construction element may be the framework of a motor-vehicle, and the movable construction element may be a trunk lid or a motor bonnet.

The push-out force of the gas spring acts on the first and second connection means which may be articulations. This push-out force is still effective, when the trunk lid or motor bonnet are in the first terminal position, i. e. in the closed position. The load acting onto the connection means and particularly onto the second connection means result in a overstressing of the connection means, particularly if the trunk lid or motor bonnet is made of synthetic plastic material.

STATEMENT OF THE PRIOR ART

From German Offenlegungsschrift 38 09 712 corresponding to U. S. Patent 4,973,097, a construction assembly of the above defined type is known, in which both the basic construction unit and the second gas spring component are provided with sloped abutment members which are mutually engaged in response to the construction element approaching its first terminal position. By this engagement of these sloped abutment members, the reaction force acting onto the second connection means is fully or partially eliminated. The engagement of the sloped abutment members is subject to wear.

OBJECT OF THE INVENTION

It is a primary object of the present invention to provide a construction assembly in which the wear problem is reduced or avoided.

A further object of the present invention is to modify the known construction such that the parts cooperating for reduction of the reaction force are less sensitive to manufacturing tolerances.

A further object of the present invention is to provide a construction assembly of the above defined type such that the parts necessary for reducing the reaction force are small and have only reduced space requirements.

SUMMARY OF THE INVENTION

A construction assembly comprises a basic construction unit and a movable construction element pivotally mounted on said basic construction unit about a substantially horizontal axis and pivotally movable between a first terminal position and a second terminal position. At least one gas spring is provided. This gas spring has an axis and includes two gas spring components, namely a cylinder and a piston rod. A first one of said gas spring components is connected to the basic construction unit by first connection means. A second one of the gas spring components is connected to the construction element by second connection means. The gas spring acts with its spring force onto said construction element, such as to compensate for at least a part of the weight of the construction element during its movement between the first terminal position and the second terminal position. Reaction forces of said gas spring occur in the first and the second connection means. Reaction force control means are provided on the basic construction unit for cooperation with the gas spring in response to the construction element approaching the first terminal position, such as to at least partially eliminate the reaction force onto the second connection means, when the construction element is in the first terminal position.

The reaction force control means comprise a lever member extending between a first lever base operatively connected with the basic construction unit and a second lever base operatively connected with the second gas spring component, when the construction element is within a predetermined range of pivotal movement adjacent said first terminal position. The lever member defines an angle of inclination with respect to the axis of the gas spring. This angle of inclination is variable against the action of resilient means in response to the construction element being pivotally moved through the predetermined range of pivotal movement. The reaction force is at least partially eliminated by variation of this angle, when the construction element approaches the first terminal position.

In this construction there is avoided substantial sliding engagement between the lever and the lever bases. Therefore, no substantial wear occurs at the lever and at the lever bases. This is of particular interest, because the lever and the lever bases can be made of less wear-resistant material.

In order to allow a considerable opening angle of the movable construction element with respect to the basic construction unit, the lever member may be disengageable from at least one of the first and second lever bases in response to pivotal movement of the construction element beyond said predetermined range of pivotal movement towards said second terminal position.

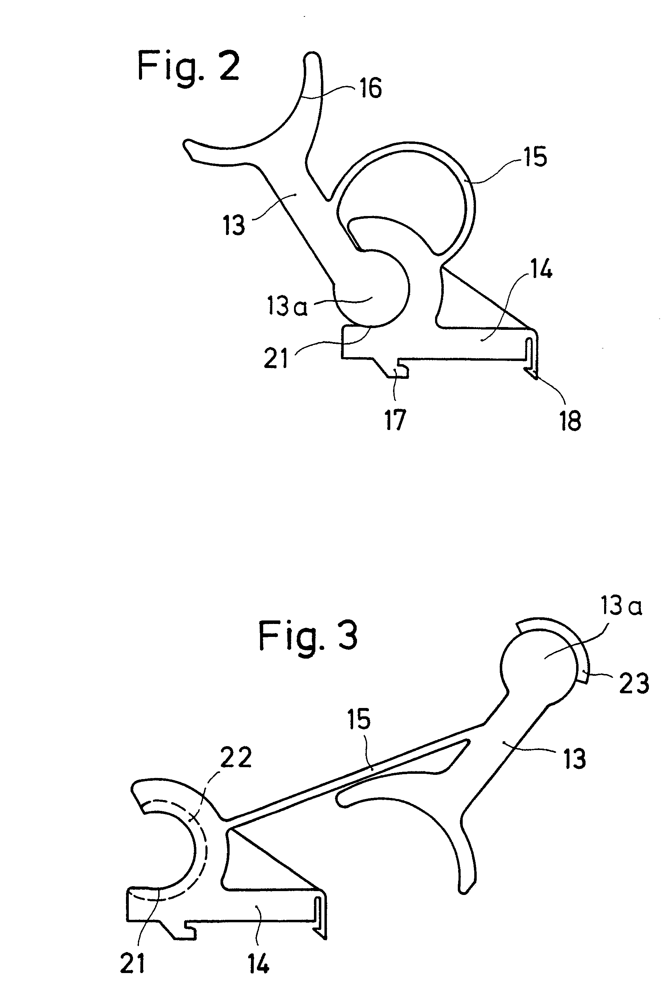

The present invention is applicable for a plurality of detail constructions. So it is possible that the second lever base is resiliently supported on the second gas spring component by resilient means, such as shown in Fig. 2 of German Offenlegungsschrift 38 09 712. It is also possible that the lever is axially compressible against resilient means. According to a preferred embodiment, however, the second connection means permit a limited movement of the second gas spring component substantially along the axis of the gas spring with respect to the construction element. This limited movement is limited by stop faces, which stop faces are engageable with each other by the spring force of the gas spring.

The lever member acts onto this second gas spring component in the first terminal position, such as to disengage these stop faces. By the disengagement of these stop faces the entrance of reaction forces into the movable construction element is completely suppressed, and the reaction forces are completely received by the lever and through the lever by the basic construction unit, which is usually more rigid than the movable construction element, which may be a trunk lid or a motor bonnet.

According to a preferred detail construction, the lever member has one lever end pivotally connected to one of said first and second lever bases and a further lever end pivotally connectable with the other one of said first and second lever bases. Such, it is easily possible to disengage said further lever end from the respective lever bases, if one wants to move the construction element through a large angle of pivotal movement.

For making sure that this further lever end and the respective lever base find into a relative position of engagement, when the construction element is approached to its first terminal position, this further lever end and said other lever base may be engageable by a socket face of one of said further lever end and said other lever base and a socket face engagement face of the other one of said further lever end and said other lever base. This socket face may be a concave cylindrical or spherical socket face, while the socket face engagement face may be a convex cylindrical or spherical socket face engagement face. Preferably, the concave cylindrical or spherical socket face is provided on the lever member, while the convex cylindrical or spherical socket face engagement face is provided on the respective lever base.

According to a most preferred embodiment, the second connection means comprise a gas-spring-side connection member connected to a construction-element-side connection member. The gas-spring-side connection member is engageable and disengageable with one end of the lever member. The construction-element-side connection member is movable through a limited range of movement with respect to the construction element. The construction element and the construction-element-side connection member are provided with stop faces. These stop faces are mutually engaged by the action of the gas spring, when the construction element is outside of the predetermined range of pivotal movement. These stop faces are disengaged from each other, when the construction element approaches the first terminal position thereof.

For making sure that the lever member and the respective lever base find into a relative position of an inter-engagement after having been disengaged, when the construction element approaches the first terminal position again, the lever member may be biased towards an engagement effecting position, when the construction element is outside the predetermined range of pivotal movement. This engagement effecting position may be such that the lever member is engaged with a respective lever base, when the construction element enters into the predetermined range of pivotal movement towards the first terminal position.

The socket face and the socket face engagement face may comprise lateral engagement faces provided e. g. by a groove means and by projection means to be accommodated by said groove means.

As the lever member may be continuously connected to one of the lever bases in operation, the lever member may be connected to one of the first and second lever bases by snap means. Such, the assembling of the construction assembly is facilitated. Preferably, the lever member is connected to the first lever base by said snap means.

The lever member may be integrally connected with one of the first and second lever bases by a biasing member, which biasing member biases the lever member towards an engagement effecting position. This idea of the present invention reduces the necessary number of individual parts.

At least one of the lever member and the first and second lever bases may be made of synthetic plastic material. Preferably, at least the lever bases and in particular also the lever itself are made of synthetic plastic material. This is of particular interest, if one of the lever bases is a multifunctional part, which has also the function of being a gas-spring-side connection member of the second connection means.

The first lever base may be operatively connected with the basic construction unit by a nose portion entering into a first gap of the basic construction unit and by a snap hook entering into a second gap of the basic construction unit. By this feature the assembling is further facilitated.

In case of an embodiment in which the second connection means are to permit a limited movement of the second gas spring component substantially along the axis of the gas spring with respect to the construction element, the second connection means may be slidably guided within an elongated slot of the construction element. An end portion of this elongated slot may define a stop face for engagement with a counter stop face of the second connection means. This elongated slot may be provided in a fastening bracket of said construction element. A bolt member of the second connection means may pass through this elongated slot. Sliding faces may be allocated to the bolt member in sliding engagement with both sides of the fastening bracket.

The stability of the construction assembly in the first terminal position of the movable construction element is increased, if the lever member is substantially aligned with the axis of the gas spring in the first terminal position of the construction element.

The gas-spring-side connection member and the construction-element-side connection member may define a ball joint and may be snappingly engaged with each other. At least the gas-spring-side connection member may be made of synthetic plastic material and may fulfil the function of a lever base allocated to the second gas spring component.

The various features of novelty which characterize the invention are pointed out with particularity in the claims annexed hereto and forming a part of the disclosure. For a better understanding of the invention, its operating advantages and specific objects attained by its use, reference should be had to the accompanying drawings and descriptive matter in which there is illustrated and described a preferred embodiment of the invention.

## BRIEF DESCRIPTION OF THE DRAWINGS

The invention is explained in greater detail hereinafter with reference to the embodiment shown in the accompanying drawings, in which

Fig. 1    shows a disposition of a gas-filled spring between a boot lid and the framework of a motor-vehicle;

Fig. 2    is an enlarged view of a lever base connected to the framework and of a lever mounted therein;

Fig. 3    shows the unit of Fig. 2 integrally moulded of synthetic plastic material;

Fig. 4    shows a fixing bracket connected to the boot lid and with a hinge member which is adapted for movement in an elongated aperture of the fastening bracket, while

Fig. 5    is a plan view of the unit shown in Fig. 4.

## DETAILED DESCRIPTION OF THE PREFERRED EMBODIMENT

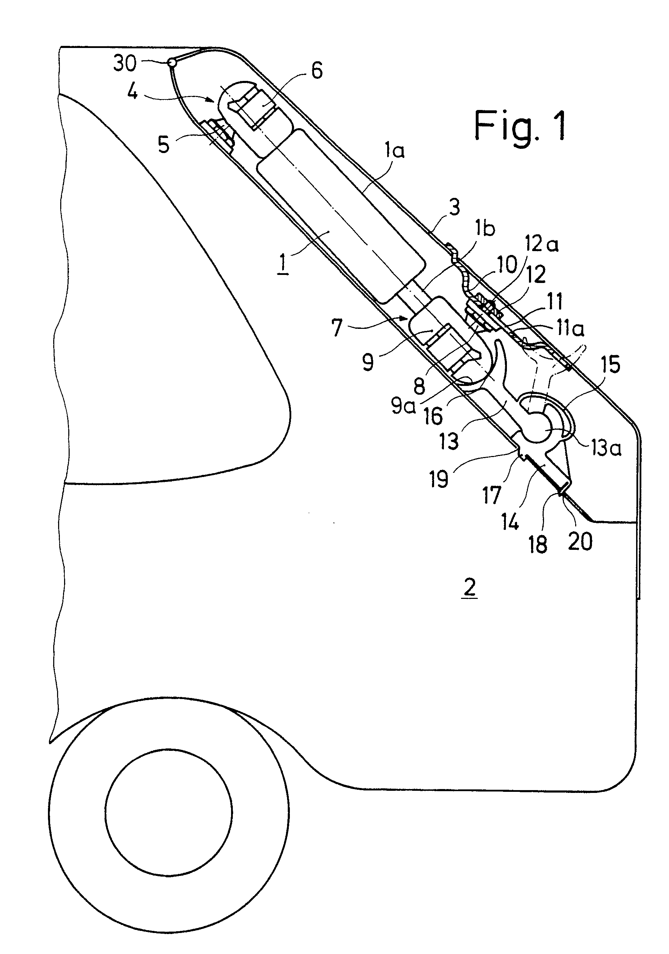

In Fig. 1, a gas-filled spring 1 is connected via an articulation 4 to a basic construction unit 2 which is e. g. the framework of a motor-vehicle. In the present case, the articulation 4 consists of a hinge element 5 disposed on the basic construction unit 2 and a hinge element 6 connected to the cylinder 1a of the gas-filled spring 1. The connection of the gas-filled spring 1 to a movable construction element or flap 3, which is mounted to pivot about a horizontal axis 30 of the basic construction unit 2, is accomplished by an articulation 7 which consists of a hinge element 8 mounted on the flap 3 and a hinge element 9 connected to the piston rod 1b of the gas-filled spring 1. The two articulations 4 and 7 are in the present case constructed as ball joints, but they may e. g. also be any other suitable type of articulating means. The hinge element 8 which is mounted on the flap 3 is guided for movement in a fastening bracket 10 having an elongated slot 11. The fastening bracket 10 is rigidly connected to the flap 3. A disc 12 is riveted to the hinge element 8 which is constructed as a ball-end pin and forms a guide disc for guidance of the hinge element 8 in the elongated slot 11. In the closed position of the flap 3 which is constructed as a boot lid, as shown in the drawings, the hinge element 9 of the gas-filled spring 1 is supported in a socket 16 of a lever 13 mounted in a lever base 14. The hinge element 9 forms a further lever base. The lever 13 is connected to the lever base 14 via a biasing element 15. The lever base 14 is easily connected to the basic construction unit 2 by means of a projection 17 which engages a first gap 19 and a snap-action hook 18 which engages a second gap 20 in the basic construction unit 2.

Upon the flap 3 being opened, the lever 13 is pivoted into the position shown by broken lines in the drawing. At the same time, as a result of the push-out force of the gas-filled spring 1, the hinge element 8 is displaced until engagement of the bolt 12a with the lower end 11a of the elongated slot 11. As a result of the now acting push-out force of the gas-filled spring 1, the flap is raised. When the flap 3 is closed again, with effect from a predetermined angle of closure, the hinge element 9 acting as a lever base 9 comes in contact with the socket 16 on the lever 13. When the closing process continues, the lever 13 is pivoted in the position shown in the drawings in full lines so that the push-out force of the gas-filled spring is transmitted via this lever 13 and the lever base 14 to the basic construction unit 2, in other words, the framework. The hinge element 8 mounted on the flap 3 is displaced upwardly in the elongated slot 11 so creating the desired relieving of the push-out force of the gas-filled spring.

The fastening bracket which accommodates the push-out force of the gas-filled spring, when the boot lid is closed, is shown in an enlarged view in Fig. 2. The lever base 14 comprises a bearing socket 21, which, with the cylindrical part 13a of the lever 13, constitutes a snap-action joint in that the bearing socket 21 engages around more than 180° of the cylindrical part 13a of the lever 13. For connecting the lever 13 to the lever base 14, the cylindrical part 13a of the lever 13 is pushed into the bearing socket 21. When the boot flap is open, the biasing element 15 moves the lever 13 into the engagement effecting position shown in Fig. 2 and in broken lines in Fig. 1 so that upon closure of the boot flap, the socket 16 cooperates with the hinge element 9 disposed on the piston rod 1b of the gas-filled spring 1. Connection of the lever base 14 to the basic construction unit 2 is accomplished as already described, in that the projection 17 is pushed through a gap in the basic construction unit 2, and the snap-action hook 18 cooperates with a second gap 20 in the sheet metal of the basic construction unit 2.

Fig. 3 shows the moulded synthetic plastics part which comprises the lever 13, the lever base 14 and the biasing element 15, as it is prior to connection of the lever 13 in the socket 21. This embodiment differs essentially from that shown in Fig. 2 in that there is provided in the socket 21 a groove 22 into which the projection 23 of the lever 13 engages.

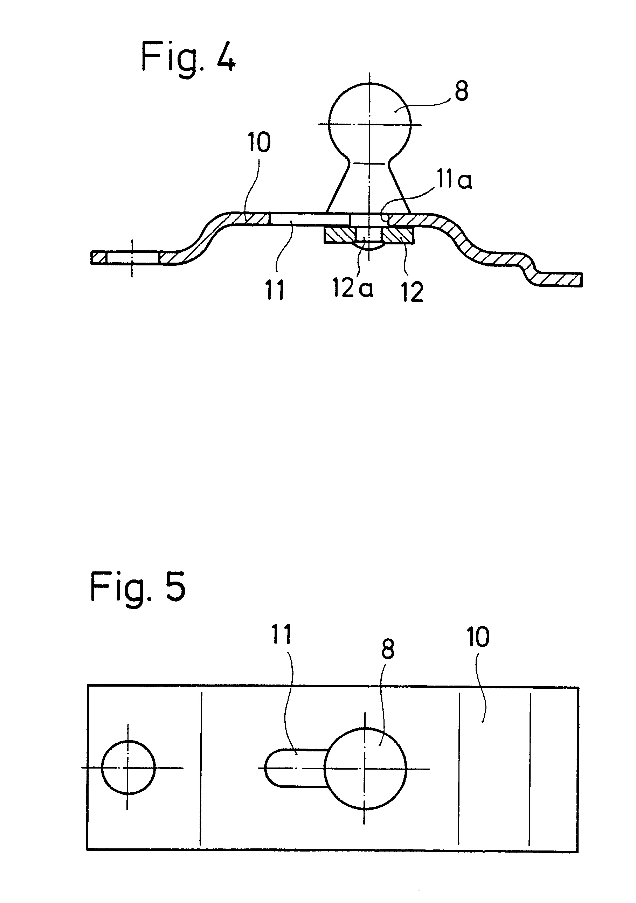

Figs. 4 and 5 show the fastening bracket 10 which is to be connected to the boot flap and which carries the hinge element 8, this hinge element 8 being disposed for displacement in the elongated slot 11. In order to guarantee perfect guidance of the hinge element 8 in the elongated slot 11, a disc 12 is riveted on the bolt 12a on the hinge element 8. This bolt 12a acts as an abutment face cooperating with the end 11a of the elongated slot 11.

While a specific embodiment of the invention has been shown and described in detail to illustrate the application of the inventive principles, it will be understood that the invention may be embodied otherwise without departing from such principles.

The reference numerals in the claims are only used for facilitating the understanding and are by no means restrictive.

## Claims

1. A construction assembly comprising:
   a basic construction unit (2);
   a movable construction element (3) pivotally mounted on said basic construction unit (2) about a substantially horizontal axis (30) and pivotally movable between a first terminal position and a second terminal position;
   at least one gas spring (1) having an axis, said gas spring (1) including two gas spring components (1a, 1b), namely a cylinder (1a) and a piston rod (1b), a first one (1a) of said gas spring components (1a, 1b) being connected to said basic construction unit (2) by first connection means (4) and a second one (1b) of said gas spring components (1a, 1b) being connected to said construction element (3) by second connection means (7), said gas spring (1) acting with its spring force onto said construction element (3), such as to compensate for at least a part of the weight of said construction element (3) during its movement between said first terminal position and said second terminal position, reaction forces of said gas spring (1) occurring in said first and in said second connection means (4,7), reaction force control means (14,13) being provided on said basic construction unit (2) for cooperation with said gas spring (1) in response to said construction element (3) approaching said first terminal position, such as to at least partially eliminate said reaction force onto said second connection means (7), when said construction element (3) is in said first terminal position,
   characterized by
   said reaction force control means (14,13) comprising a lever member (13) extending between a first lever base (14) operatively connected with said basic construction unit (2) and a second lever base (9) operatively connected with said second gas spring component (1b), when said construction element (3) is within a predetermined range of pivotal movement adjacent said first terminal position, said lever member (13) defining an angle of inclination with respect to said axis of said gas spring (1), said angle of inclination being variable against the action of resilient means in response to said construction element (3) being pivotally moved through said predetermined range of pivotal movement, said reaction force being at least partially eliminated by variation of said angle, when said construction element (3) approaches said first terminal position.

2. A construction assembly as set forth in claim 1, said lever member (13) being disengageable from at least one of said first (14) and second (9) lever bases (14,9) in response to pivotal movement of said construction element (3) beyond said predetermined range of pivotal movement towards said second terminal position.

3. A construction assembly as set forth in claim 1 or 2, said second connection means (9) permitting a limited movement of said second gas spring component (1b) substantially along the axis of said gas spring (1) with respect to said construction element (3), said limited movement being limited by stop faces (12a, 11a), which stop faces (12a, 11a) are engageable with each other by the spring force of said gas spring (1), said lever member (13) acting onto said second gas spring component (1b) in said first terminal position, such as to disengage said stop faces (11a, 12a).

4. A construction assembly as set forth in one of claims 1 - 3, said lever member (13) having one lever end (13a) pivotally connected to one (14) of said first (14) and second (9) lever bases (14,9) and a further lever end (16) pivotally connectable with the other one (9) of said first (14) and second (9) lever bases (14,9).

5. A construction assembly as set forth in claim 4, said further lever end (16) and said other lever base (9) being engageable by a socket face (16) of one (16) of said further lever end (16) and said other lever base (9) and a socket face engagement face (9a) of the other one (9) of said further lever end (16) and said other lever base (9).

6. A construction assembly as set forth in claim 5, said socket face (16) being a concave cylindrical or spherical socket face (16) and said socket face engagement face (9a) being a convex cylindrical or spherical socket face engagement face (9a).

7. A construction assembly as set forth in claim 6, said concave cylindrical or spherical socket face (16) being provided on said lever member (13), said convex cylindrical or spherical socket face engagement face (9a) being provided on the respective lever base (9).

8. A construction assembly as set forth in one of claims 1 - 7, said second connection means (7) comprising a gas-spring-side connection member (9) connected with a construction-element-side connection member (8), said gas-spring-side connection member (9) being engageable and disengageable with one end (16) of said lever member (13), said construction-element-side connection member (8) being movable through a limited range of movement with respect to said construction element (3), said construction element (3) and said construction-element-side connection member (8) being provided with stop faces (11a, 12a), said stop faces (11a, 12a) being mutually engaged by the action of said gas spring (1), when said construction element (3) is outside said predetermined range of pivotal movement, said stop faces (11a, 12a) being disengaged from each other, when said construction element (3) approaches said first terminal position.

9. A construction assembly as set forth in one of claims 2 - 8, said lever member (13) being biased towards an engagement effecting position (dotted lines in Fig. 1), when said construction element (3) is outside said predetermined range of pivotal movement, said engagement effecting position being such that said lever member (13) is engaged with a respective lever base (9), when said construction element (3) enters into said predetermined range of pivotal movement towards said first terminal position.

10. A construction assembly as set forth in one of claims 5 - 9, said socket face (16) and said socket face engagement face (9a) comprising lateral engagement faces provided by a groove means (22) and projection means (23) accommodated by said groove means (22).

11. A construction assembly as set forth in one of claims 1 - 9, said lever member (13) being connected to one (14) of said first (14) and second (9) lever bases (14,9) by snap means.

**12.** A construction assembly as set forth in claim 11, said lever member (13) being connected to said first lever base (14) by said snap means.

**13.** A construction assembly as set forth in one of claims 2 - 12,
said lever member (13) being integrally connected with one (14) of said first (14) and second (9) lever bases (14,9) by a biasing member (15), said biasing member (15) biasing said lever member (13) towards an engagement effecting position (dotted lines in Fig. 1).

**14.** A construction assembly as set forth in one of claims 1 - 13,
at least one of said lever member (13) and said first and second lever bases (14,9) being made of synthetic plastic material.

**15.** A construction assembly as set forth in one of claims 1 - 14,
said first lever base (14) being operatively connected to said basic construction unit (2) by a nose portion (17) entering into a first gap (19) of said basic construction unit (2) and by a snap hook (18) entering into a second gap (20) of said basic construction unit (2).

**16.** A construction assembly as set forth in one of claims 3 - 15,
said second connection means (7) being slidably guided within an elongated slot (11) of said construction element (3), an end portion (11a) of said elongated slot (11) defining a stop face (11a) for engagement with a counter stop face (12a) of said second connection means (7).

**17.** A construction assembly as set forth in claim 16, said elongated slot (11) being provided in a fastening bracket (10) of said construction element (3), a bolt member (12a) of said second connection means (7) passing through said elongated slot (11), sliding faces (8,12) being allocated to said bolt member (12a) in sliding engagement with both sides of said fastening bracket (10).

**18.** A construction assembly as set forth in one of claims 1 - 17,
said lever member (13) being substantially aligned with the axis of said gas spring (1) in said first terminal position of said construction element (3).

**19.** A construction assembly as set forth in one of claims 1 - 18,

said basic construction unit (2) being the framework of a motor-vehicle, said construction element (3) being a flap member (3) articulated to said framework (2).

**20.** A construction assembly as set forth in claim 8, said gas-spring-side connection member (9) and said construction-element-side connection member (8) defining a ball joint and are snappingly engaged with each other.

Fig. 1

# Fig. 2

# Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE-A-3 809 712   (STABILUS)<br>* the whole document *<br><br>— — — | 1 | E 05 F 3/02<br>F 16 F 9/02 |
| A | FR-A-2 349 768   (STABILUS)<br>* page 1, line 29 - page 2, line 13 *<br><br>— — — — — | 1 | |

TECHNICAL FIELDS
SEARCHED (Int. Cl.5)

E 05 F
F 16 F

The present search report has been drawn up for all claims

| Place of search | Date of completion of search | Examiner |
|---|---|---|
| The Hague | 29 May 91 | NEYS B.G. |